# EUROPEAN PATENT SPECIFICATION

(11) **EP 2 612 537 B1**
(45) Date of publication and mention of the grant of the patent: **27.04.2016**
(21) Application number: 11708652.0
(22) Date of filing: 04.03.2011
(51) Int. Cl.: H04W 92/08, H04W 88/06

(54) **MOBILE COMMUNICATION DEVICES WITH MULTIPLE SUBSCRIPTIONS THAT UTILIZE A SINGLE BASEBAND-RADIO FREQUENCY RESOURCE CHAIN**
MOBILE KOMMUNIKATIONSVORRICHTUNGEN MIT MEHRFACHEN TEILNAHMEN MIT VERWENDUNG EINER EINZELBASISBAND-FUNKFREQUENZRESSOURCENKETTE
DISPOSITIFS DE COMMUNICATION MOBILE AVEC ABONNEMENTS MULTIPLES QUI UTILISENT UNE CHAÎNE DE RESSOURCES DE FRÉQUENCES RADIO À BANDE DE BASE UNIQUE

(30) Priority: 02.03.2011 US 201113039056; 05.03.2010 US 311090 P
(43) Date of publication of application: 10.07.2013
(73) Proprietor: Qualcomm Incorporated, San Diego, CA 92121-1714 (US)
(72) Inventor: SPARTZ, Michael K., San Diego, California 92121-1714 (US); NAMBIAR, Rajiv R., San Diego, California 92121-1714 (US); LEE, Way-Shing, San Diego, California 92121-1714 (US); SALAMAN, Glenn A., San Diego, California 92121-1714 (US); NGAI, Francis M., San Diego, California 92121-1714 (US); SHAHIDI, Reza, San Diego, California 92121-1714 (US)
(74) Representative: Catesby, Olivia Joanne
(86) International application number: PCT/US2011/027262
(87) International publication number: WO 2011/109750

(56) References cited:
- WO-A1-2007/036962
- WO-A2-2006/124550
- DE-A1- 10 138 835
- US-A1- 2006 234 693
- US-A1- 2009 186 651
- US-B1- 6 356 769

## Description

### I. Claim of Priority

This application claims priority to U.S. Patent Application No. 61/311,090, filed March 5, 2010.

### II. Field

The present disclosure is generally related to devices with multiple subscriptions that utilize a single baseband-radio frequency (BB-RF) resource chain.

### III. Description of Related Art

Advances in technology have resulted in smaller and more powerful computing devices. For example, there currently exist a variety of portable personal computing devices, including wireless computing devices, such as portable wireless telephones, personal digital assistants (PDAs), and paging devices that are small, lightweight, and easily carried by users. More specifically, portable wireless telephones, such as cellular telephones and internet protocol (IP) telephones, can communicate voice and data packets over wireless networks. Further, many such wireless telephones include other types of devices that are incorporated therein. For example, a wireless telephone can also include a digital still camera, a digital video camera, a digital recorder, and an audio file player. Also, such wireless telephones can process executable instructions, including software applications, such as a web browser application that can be used to access the Internet. As such, these wireless telephones can include significant computing capabilities.

A mobile communication device may enable a user to utilize multiple subscriptions (that may be associated with the same or different networks). To illustrate, a first subscriber identity module (SIM) of a dual SIM dual standby (DSDS) device may be associated with a first subscription and a second SIM may be associated with a second subscription. DSDS devices that use a single baseband-radio frequency (BB-RF) resource chain may be unable to support simultaneous services on different subscriptions. For example, during a call on one subscription, the other subscription may be out of service, resulting in potential missed calls. As another example, other modem procedures (e.g., mobility procedures such as reselections, registrations, etc.) on one subscription may result in temporary loss of service on the other subscription. While DSDS devices may support dual subscription concurrency by using two separate dedicated BB-RF resource chains for the two subscriptions, this may lead to a higher bill of materials (BOM) and a larger printed circuit board (PCB) area.

Attention is drawn to the document US 6 356 769 B1.

### IV. Summary

A controller may be used to arbitrate access to a single BB-RF resource chain of a mobile communication device that includes multiple subscriptions in order to manage a performance impact to a high priority subscription or activity. Further, a receive diversity capability of a modem may provide the ability to concurrently receive communication data (e.g., voice call data or packet-switched IP data) related to multiple subscriptions.

In particular embodiment, a mobile communication device includes a single baseband-radio frequency (BB-RF) resource chain. A first identity module (e.g., a first SIM), a second identity module (e.g., a second SIM), and a controller are communicatively coupled to the single BB-RF resource chain. The first identity module is associated with a first subscription, and the second identity module is associated with a second subscription. The controller may be configured to arbitrate access to the single BB-RF resource chain to perform a first activity that corresponds to the first subscription or a second activity that corresponds to the second subscription. The controller may interrupt a data session processed by the single BB-RF resource chain in response to receiving information indicating that a voice call is to be processed by the single BB-RF resource chain.

A mobile communication device with multiple subscriptions includes a modem that supports receive diversity. In a particular embodiment, a method includes receiving first communication data at a primary signal input of the modem. The first communication data is related to a first subscription and is routed to the primary signal input of the modem via a primary radio frequency (RF) processing path. The method also includes receiving second communication data related to a second subscription at a secondary signal input of the modem. The second communication data is routed to the secondary signal input via a secondary RF processing path. The method includes processing the first communication data related to the first subscription and processing the second communication data related to the second subscription at the modem.

In another particular embodiment, an apparatus includes means for receiving a first identity module (e.g., a first SIM) that is associated with a first subscription and means for receiving a second identity module (e.g., a second SIM) that is associated with a second subscription. The apparatus also includes means for arbitrating access to a single BB-RF resource chain to perform a first activity that corresponds to the first subscription or a second activity that corresponds to the second subscription. A data session that is processed by the single BB-RF resource chain may be interrupted in response to receiving information indicating that a voice call is to be processed by the single BB-RF resource chain.

One particular advantage provided by at least one of the disclosed embodiments is that performance of multi-subscription devices that utilize a single BB-RF resource chain may be improved. For example, a performance impact to a high priority subscription or activity may be managed by arbitrating access to the single BB-RF resource chain. As another example, receive diversity may provide the ability to concurrently receive communication data related to multiple subscriptions.

Other aspects, advantages, and features of the present disclosure will become apparent after review of the entire application, including the following sections: Brief Description of the Drawings, Detailed Description, and the Claims.

### V. Brief Description of the Drawings

FIG. 1 is a diagram of a particular illustrative embodiment of a system of arbitrating access to a single BB-RF resource chain of a mobile communication device with multiple subscriptions;
FIG. 2 is a diagram of a particular illustrative embodiment of a system of processing communication data related to multiple subscriptions utilizing a modem that supports receive diversity;
FIG. 3 is a chart that illustrates processing communication data related to multiple subscriptions utilizing a modem that supports receive diversity;
FIG. 4 is a flow chart of a first illustrative embodiment of a method of processing communication data related to multiple subscriptions utilizing a modem that supports receive diversity;
FIG. 5 is a flow chart of a second illustrative embodiment of a method of processing communication data related to multiple subscriptions utilizing a modem that supports receive diversity;
FIG. 6 is a flow chart of a third illustrative embodiment of a method of processing communication data related to multiple subscriptions utilizing a modem that supports receive diversity; and
FIG. 7 is a block diagram of a mobile communication device with multiple subscriptions that share access to a single BB-RF resource chain.

### VI. Detailed Description

The present disclosure describes arbitration of access to a single BB-RF resource chain of a multi-subscription mobile communication device in order to manage a performance impact with respect to a high priority subscription or activity. The present disclosure also describes the use of a receive diversity capability of a modem to provide the ability to concurrently receive communication data (e.g., voice call data or packet-switched IP data) related to multiple subscriptions without separate dedicated BB-RF resource chains.

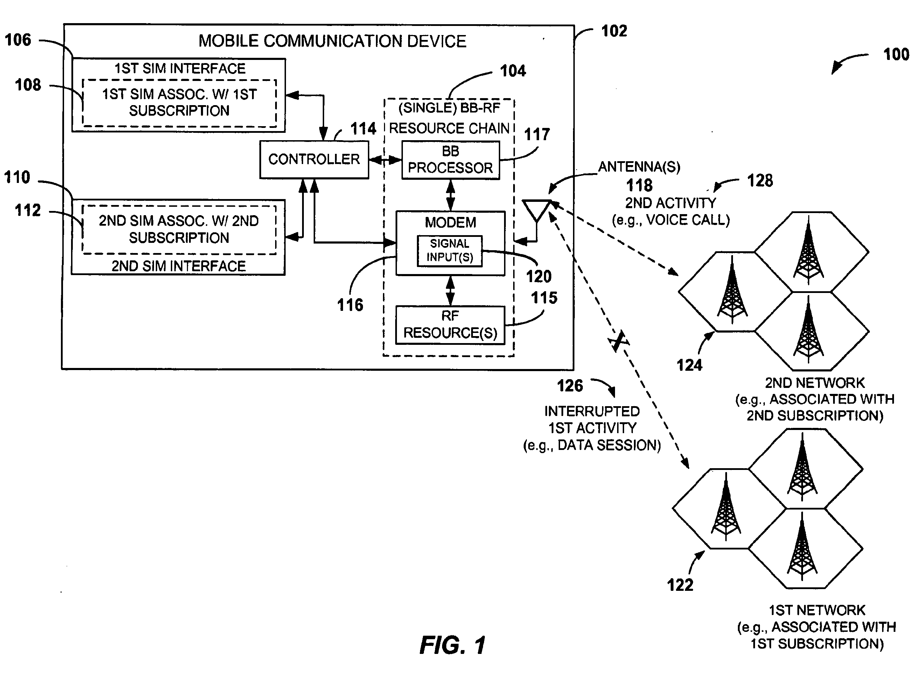

Referring to FIG. 1, a particular embodiment of a system of arbitrating access to a single BB-RF resource chain 104 of a mobile communication device that includes multiple subscriptions is illustrated and is generally designated 100. The system 100 includes a mobile communication device 102 (e.g., a mobile telephone) with multiple subscriptions. For example, each subscription may be associated with its own identity module, such as a subscriber identity module (SIM), a code division multiple access (CDMA) removable user identity module (CDMA R-UIM), or other type of R-UIM. Alternatively, each subscription may be associated with a common identity module (e.g., a common SIM). In the embodiment illustrated in FIG. 1, the device 102 is capable of receiving multiple SIMs that share access to one or more resources of a single BB-RF resource chain 104. In the embodiment illustrated in FIG. 1, the mobile communication device 102 is a dual SIM dual standby (DSDS) device that includes a first SIM interface 106 to receive a first SIM 108 that is associated with a first subscription and a second SIM interface 110 to receive a second SIM 112 that is associated with a second subscription. For example, the SIMs 108, 112 may be plugged into or other otherwise connected to the respective SIM interfaces 106, 110. The first SIM 108 and the second SIM 112 may be communicatively coupled to the single BB-RF resource chain 104 (e.g., via electrical connections between the SIM interfaces 106, 110 and the single BB-RF resource chain 104). To illustrate, a first electrical connection between the first SIM interface 106 and the single BB-RF resource chain 104 may provide a communication path between the first SIM 108 and the single BB-RF resource chain 104 when the first SIM 106 is connected to the first SIM interface 106. As another example, a second electrical connection between the second SIM interface 110 and the single BB-RF resource chain 104 may provide a communication path between the second SIM 112 and the single BB-RF resource chain 104 when the second SIM 112 is connected to the second SIM interface 110.

The mobile communication device 102 also includes a controller 114 that is communicatively coupled to the single BB-RF resource chain 104. The controller 114 is configured to arbitrate access to the single BB-RF resource chain 104 to perform a first activity that corresponds to the first subscription or a second activity that corresponds to the second subscription. In the embodiment illustrated in FIG. 1, the single BB-RF resource chain 104 of the mobile communication device 102 includes one or more RF resources 115, a modem 116, and a BB processor 117. The single BB-RF resource chain 104 is communicatively coupled to one or more antennas 118 that are associated with one or more signal inputs 120 of the modem 116. While the modem 116 is illustrated as separate from the BB processor 117 in FIG. 1, in alternative embodiments, the modem 116 and the BB processor 104 may be packaged together. A first network 122 may be associated with the first subscription, and a second network 124 may be associated with the second subscription. For example, the first subscription may be associated with a data service provided by the first network 122, and the second subscription may be associated with a voice service provided by the second network 124.

One subscription or activity may be considered a higher priority than another subscription or activity. For example, a mobile originated (MO) voice call or a mobile terminated (MT) voice call may be considered a higher priority activity than an ongoing data session on another subscription (e.g., a data session associated with a low-data-rate application). Low-data-rate "bursty" applications (e.g., push email, instant messaging, etc.) may lead to the mobile communication device 102 being in a connected state for the data subscription for extended periods of time (as high as 30-50% of the time in some scenarios). In order to reduce the likelihood of performance degradation to a higher priority subscription or activity, the controller 114 may arbitrate access to the single BB-RF resource chain 104.

In operation, the controller 114 may interrupt a first activity 126 (e.g., a data session with the first network 122) processed by the single BB-RF resource chain 104 in response to receiving information indicating that a second activity 128 (e.g., a voice call with the second network 124) is to be processed by the single BB-RF resource chain 104. For example, in the case of an MO voice call, the controller 114 may interrupt the ongoing data session (e.g., suspend the first activity 126) before originating the voice call (e.g., the second activity 128). Thus, a user may be able to initiate a voice call on one subscription while engaged in an interactive/background data session (e.g., a web download, background email) on another subscription. As another example, in the case of an MT voice call, the controller 114 may instruct the modem 116 to "tune away" to monitor pages on the other subscription to allow for reception of incoming calls. Thus, a user may be able to receive a voice call on one subscription while engaged in an interactive/background data session (e.g., a web download, background email) on another subscription. During the interruption of a data session, the controller 114 may prevent the transfer of additional data. After termination of the voice call, the data session may be resumed if possible (e.g., if protocol stack timers have not expired), or the data session may be re-initiated through application layer actions.

A user-configurable priority subscription may be used to arbitrate the sharing of modem/RF resources (e.g., one or more resources of the single BB-RF resource chain 104). Such arbitration may limit the performance impact to the user-designated subscription that results from paging collisions that may be associated with multiple subscriptions sharing resources. Further, arbitration of different types of activities across subscriptions (e.g., paging reception on one subscription versus measurements on another subscription) can be performed based on the relative importance of the activity. For example, the controller 114 may be configured to arbitrate access to the single BB-RF resource chain 104 based on a user-selected subscription priority and further based on a relative importance of the first activity 126 as compared to the second activity 128. To illustrate, the first subscription may be used for voice calls and may be considered a higher priority subscription than a second subscription that is used for data sessions. As another example, a particular type of data session (e.g., a video telephony session) may be considered a higher priority activity than a voice call. A time-shared paging schedule may be adjusted in order to reduce the likelihood of a higher priority subscription or activity missing pages due to paging collisions.

A user may have access to different services on the different subscriptions. Even identical services may be associated with different performance or cost. As such, the controller 114 may arbitrate access to the single BB-RF resource chain 104 for data subscription management purposes. In a particular embodiment, the data session (e.g., the first activity 126) may be conducted based on a default setting that designates either the first subscription or the second subscription as a default subscription to conduct the data session. In one embodiment, the default subscription is user-selectable. To illustrate, a user may configure the first subscription to be the designated data subscription. In the embodiment illustrated in FIG. 1, the first network 122 may be used to perform web browsing, email download, etc. for cost, download speed, or other reasons. As another example, for global positioning system (GPS) network assisted protocols, such as Secure User Plane (SUPL), there may be some information that is network specific. When a carrier-specific GPS application is initiated, the subscription associated with the network that provides the network specific information may be used. As a further example, access to carrier-specific specialized services may be restricted to subscribers. For applications accessing these services, a user may choose to specify a subscription. In a particular embodiment, data subscription management may include extensions to application-modem application programming interfaces (APIs) to enable designation of a subscription. Carrier provisioning, original equipment manufacturer (OEM) configuration, user configuration, or a combination thereof may be used for data subscription management. Thus, the system 100 of FIG. 1 may reduce a performance impact (e.g., session disruptions, missed calls) to a high priority subscription or activity by arbitrating access to the single BB-RF resource chain 104.

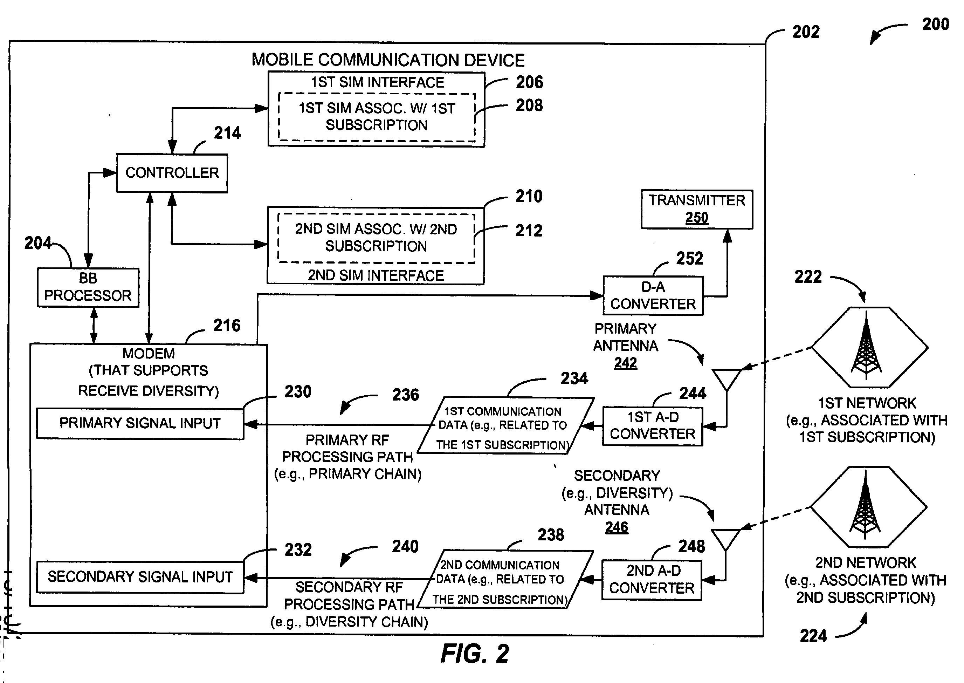

Referring to FIG. 2, a particular embodiment of a system of processing communication data related to multiple subscriptions utilizing a modem that supports receive diversity is illustrated and is generally designated 200. When a modem supports receive diversity, concurrencies that do not require the use of a transmitter (e.g., non-timing-critical acquisition or channel maintenance procedures or timing critical page demodulation procedures) may be supported. The receive diversity capability of the modem may be utilized to route communication data related to different subscriptions to different signal inputs via different RF processing paths.

The system 200 includes a mobile communication device 202 (e.g., a mobile telephone) with multiple subscriptions. For example, each subscription may be associated with its own identity module (e.g., SIM, CDMA R-UIM, or other type of R-UIM). Alternatively, each subscription may be associated with a common identity module (e.g., a common SIM). In the embodiment illustrated in FIG. 2, the device 202 is capable of receiving multiple SIMs that share access to a single BB-RF resource chain (e.g., the single BB-RF resource chain 104 of FIG. 1). In the embodiment illustrated in FIG. 2, the mobile communication device 202 includes a first SIM interface 206 to receive a first SIM 208 that is associated with a first subscription and a second SIM interface 210 to receive a second SIM 212 that is associated with a second subscription. The first SIM 208 and the second SIM 212 may be communicatively coupled to the single BB-RF resource chain.

The mobile communication device 202 also includes a controller 214 that is communicatively coupled to the single BB-RF resource chain. The controller 214 is configured to arbitrate access to the single BB-RF resource chain to perform a first activity that corresponds to the first subscription or a second activity that corresponds to the second subscription. The mobile communication device 202 includes a modem 216 that supports receive diversity. While the modem 216 is illustrated as separate from the BB processor 204 in FIG. 2, in alternative embodiments, the modem 216 and the BB processor 204 may be packaged together. A first network 222 may be associated with the first subscription, and a second network 224 may be associated with the second subscription.

In the embodiment illustrated in FIG. 2, the modem 216 includes a primary signal input 230 and a secondary signal input 232. The modem 216 is responsive to the controller 214 to receive first communication data 234 related to the first subscription at the primary signal input 230. The first communication data 234 (e.g., IQ symbols) may be routed to the primary signal input 230 via a primary RF processing path 236 (e.g., a primary receive chain). The modem 216 is further responsive to the controller 214 to receive second communication data 238 related to the second subscription at the secondary signal input 232. The second communication data 238 (e.g., IQ symbols) may be routed to the secondary signal input 232 via a secondary RF processing path 240 (e.g., a diversity receive chain). The modem 216 is responsive to the controller 214 to process the first communication data 234 related to the first subscription and to process the second communication data 238 related to the second subscription.

In the embodiment illustrated in FIG. 2, the mobile communication device 202 includes a primary antenna 242 that is associated with the primary RF processing path 236. A first analog-to-digital (A-D) converter 244 may be communicatively coupled to the primary antenna 240 and to the primary signal input 230 via the primary RF processing path 236. The first A-D converter 244 and other receiver circuitry (not shown) may convert analog signals received at the primary antenna 242 into digital data (e.g., the first communication data 234). The mobile communication device 202 also includes a secondary antenna 246 (e.g., a diversity antenna) that is associated with the secondary RF processing path 240 (e.g., the diversity receive chain). A second A-D converter 248 may be communicatively coupled to the secondary antenna 246 and to the secondary signal input 232 via the secondary RF processing path 240. The second A-D converter 248 and other receiver circuitry (not shown) may convert analog signals received at the secondary antenna 246 into digital data (e.g., the second communication data 238).

In operation, the first communication data 234 may be routed to the primary signal input 230 of the modem 216 via the primary RF processing path 236. The second communication data 238 may be routed to the secondary signal input 232 of the modem 216 via the secondary RF processing path 240. The first communication data 234 and the second communication data 238 may be processed at the modem 216. The modem 216 that supports receive diversity may provide for "simultaneous" dual-receive capabilities without multiple dedicated BB-RF resource chains. For example, the first communication data 234 may be associated with a non-timing-critical acquisition or channel maintenance procedure on the first subscription, and the second communication data 238 may be associated with another non-timing-critical acquisition or channel maintenance procedure on the second subscription. As another example, the first communication data 234 may be associated with a timing critical page demodulation procedure for an incoming call on the first subscription, and the second communication data 238 may be associated with another timing critical page demodulation procedure for another incoming call on the second subscription.

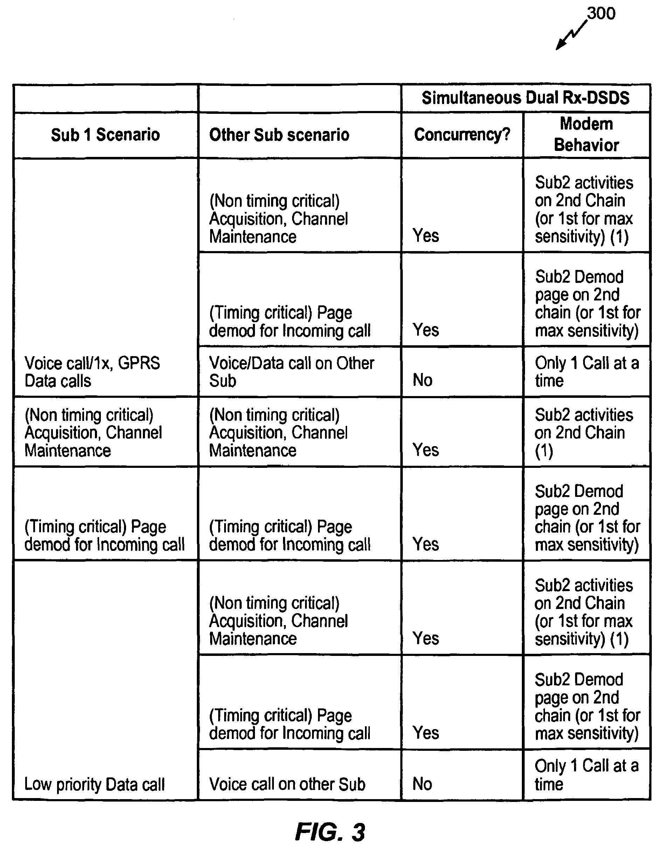

When the second communication data 238 is associated with a procedure requiring use of a transmitter 250 (coupled to the modem 216 via a D-A converter 252), concurrency may not be supported (see FIG. 3). That is, the modem 216 may only support one call at a time. For example, when the first communication data 234 includes voice call information or data call information (e.g., general packet radio service (GPRS) data call information), the second communication data 238 may not be processed at the modem 216 when the second communication data 238 is associated with a procedure requiring use of the transmitter 250 (e.g., a voice or data call on the other subscription). As another example, when the first communication data 234 is associated with a low priority data call, the second data 238 may not be processed at the modem 216 when the second communication data 238 is associated with a procedure requiring use of the transmitter 250 (e.g., a voice call on another subscription).

FIG. 2 illustrates that the receive diversity capability of the modem 216 may provide the ability to simultaneously receive communication data related to multiple subscriptions without using separate dedicated BB-RF resource chains. Thus, in this case, the controller 214 may not need to interrupt an ongoing data session (e.g., the first activity 126 of FIG. 1) before receiving or originating a voice call (e.g., the second activity 128 of FIG. 1). Further, the primary and secondary antennas 246, 248 may enable simultaneous monitoring of pages on two subscriptions.

Referring to FIG. 3, a chart that illustrates processing communication data related to multiple subscriptions utilizing a modem that supports receive diversity is generally designated 300. FIG. 3 illustrates that a modem with receive diversity capability (e.g., the modem 216 of FIG. 2) may provide for "simultaneous dual-receive" capabilities with a single BB-RF resource chain.

FIG. 3 illustrates that a modem that supports receive diversity (e.g., the modem 216 of FIG. 2) may concurrently support certain activities in a "simultaneous dual-receive" configuration. To illustrate, the "simultaneous dual-receive" configuration may simultaneously support a voice call or data call (e.g., GPRS data call) on a first subscription and a non-timing-critical acquisition or channel maintenance procedure on a second subscription. Further, the "simultaneous dual-receive" configuration may concurrently support a voice call or data call (e.g., GPRS data call) on a first subscription and a timing critical page demodulation procedure for another incoming call on the second subscription.

FIG. 3 illustrates that a modem that supports receive diversity (e.g., the modem 216 of FIG. 2) may concurrently support certain activities in a "simultaneous dual-receive" configuration. For example, the "simultaneous dual-receive" configuration may concurrently support non-timing-critical acquisition or channel maintenance procedures. As another example, the "simultaneous dual-receive" configuration may concurrently support timing critical page demodulation procedures for incoming calls.

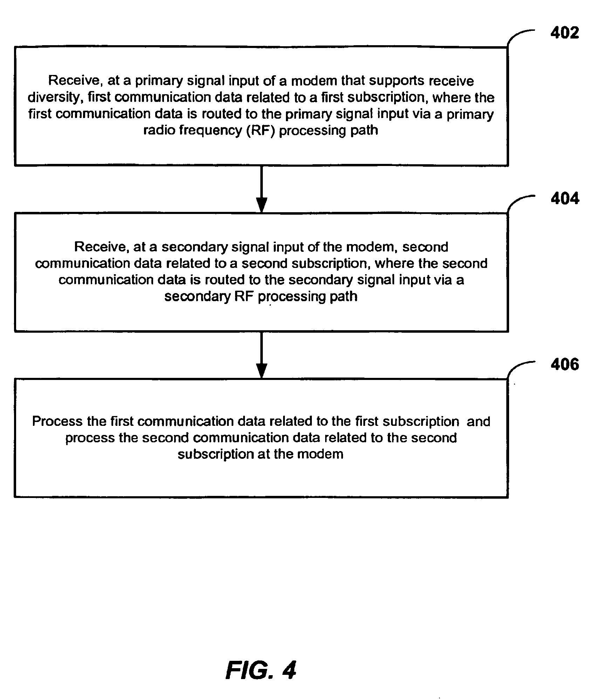

Referring to FIG. 4, a particular embodiment of a method of processing communication data related to multiple subscriptions utilizing a modem that supports receive diversity is illustrated. FIG. 4 illustrates that a modem with receive diversity capability (e.g., the modem 216 of FIG. 2) may provide for "simultaneous" dual-receive capabilities with a single BB-RF resource chain.

The method includes receiving first communication data at a primary signal input of a modem that supports receive diversity, at 402. A mobile communication device with multiple subscriptions includes the modem that supports receive diversity. For example, the mobile communication device may be the mobile communication device 202 of FIG. 2. The first communication data is related to a first subscription and is routed to the primary signal input of the modem via a primary RF processing path. To illustrate, the modem 216 of FIG. 2 may receive the first communication data 234 at the primary signal input 230, and the first communication data 234 may be routed to the primary signal input 230 via the primary RF processing path 236.

The method also includes receiving second communication data related to a second subscription at a secondary signal input of the modem, at 404. The second communication data is routed to the secondary signal input via a secondary RF processing path. To illustrate, the modem 216 of FIG. 2 may receive the second communication data 238 at the secondary signal input 232, and the second communication data 238 may be routed to the secondary signal input 232 via the secondary RF processing path 240.

The method includes processing the first communication data related to the first subscription and processing the second communication data related to the second subscription at the modem, at 406. To illustrate, the modem 216 of FIG. 2 may process the first communication data 234 and the second communication data 238. Thus, FIG. 4 illustrates that a receive diversity capability of a modem may provide the ability to simultaneously receive communication data related to multiple subscriptions (each associated with a different SIM).

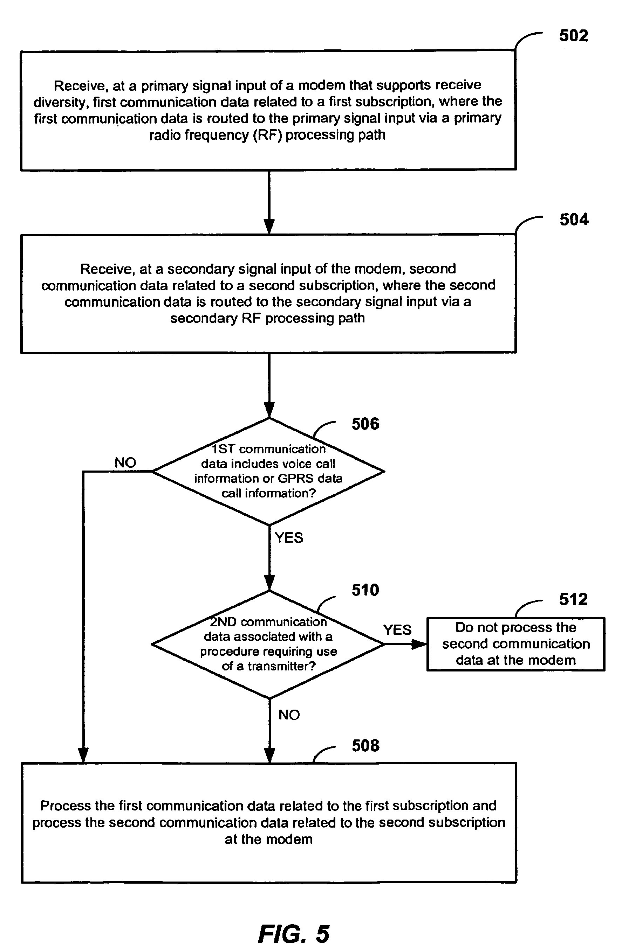

Referring to FIG. 5, a particular embodiment of a method of processing communication data related to multiple subscriptions utilizing a modem that supports receive diversity is illustrated. FIG. 5 illustrates that a mobile communication device with multiple subscriptions may utilize a modem with receive diversity capability (e.g., the modem 216 of FIG. 2) to provide for "simultaneous" dual-receive capabilities with a single shared BB-RF resource chain. For example, the mobile communication device may be the mobile communication device 202 of FIG. 2.

The method includes receiving first communication data at a primary signal input of a modem that supports receive diversity, at 502. The first communication data is related to a first subscription and is routed to the primary signal input of the modem via a primary RF processing path. To illustrate, the modem 216 of FIG. 2 may receive the first communication data 234 at the primary signal input 230, and the first communication data 234 may be routed to the primary signal input 230 via the primary RF processing path 236.

The method also includes receiving second communication data related to a second subscription at a secondary signal input of the modem, at 504. The second communication data is routed to the secondary signal input via a secondary RF processing path. To illustrate, the modem 216 of FIG. 2 may receive the second communication data 238 at the secondary signal input 232, and the second communication data 238 may be routed to the secondary signal input 232 via the secondary RF processing path 240.

The method includes determining whether the first communication data includes voice call information or data call (e.g., GPRS data call) information, at 506. When the first communication data does not include voice call information or data call information, the method includes processing the first communication data related to the first subscription and processing the second communication data related to the second subscription at the modem, at 508. For example, referring to FIG. 3, when the first communication data is associated with a non-timing-critical acquisition or channel maintenance procedure on the first subscription, the receive diversity capability of the modem 216 may enable simultaneous processing of second communication data associated with another non-timing-critical acquisition or channel maintenance procedure on the second subscription. As another example, when the first communication data is associated with a timing critical page demodulation procedure for an incoming call on the first subscription, the receive diversity capability of the modem 216 may enable simultaneous processing of second communication data associated with another timing critical page demodulation procedure for another incoming call on the second subscription.

When the first communication data includes voice call information or data call information, the method includes determining whether the second communication data is associated with a procedure requiring use of a transmitter, at 510. When the second communication data is associated with a procedure requiring use of a transmitter, the second communication data is not processed at the modem, as illustrated at 512. For example, referring to FIG. 3, when the first communication data is associated with a voice call or data call on the first subscription and the second communication data is associated with a voice call or data call on the second subscription (i.e., two activities that utilize a transmitter 250), concurrency may not be supported.

When the first communication data includes voice call information or data call information and the second communication data is not associated with a procedure requiring use of a transmitter, the first communication data and the second communication data may be processed concurrently or substantially concurrently. For example, referring to FIG. 3, when the first communication data is associated with a voice call or data call (e.g., a GPRS data call) on the first subscription and the second communication data is associated with a non-timing-critical acquisition or channel maintenance procedure on the second subscription, concurrency may be supported. As another example, when the first communication data is associated with a voice call or data call on the first subscription and the second communication data is associated with a timing critical page demodulation procedure for an incoming call on the second subscription, concurrency may be supported.

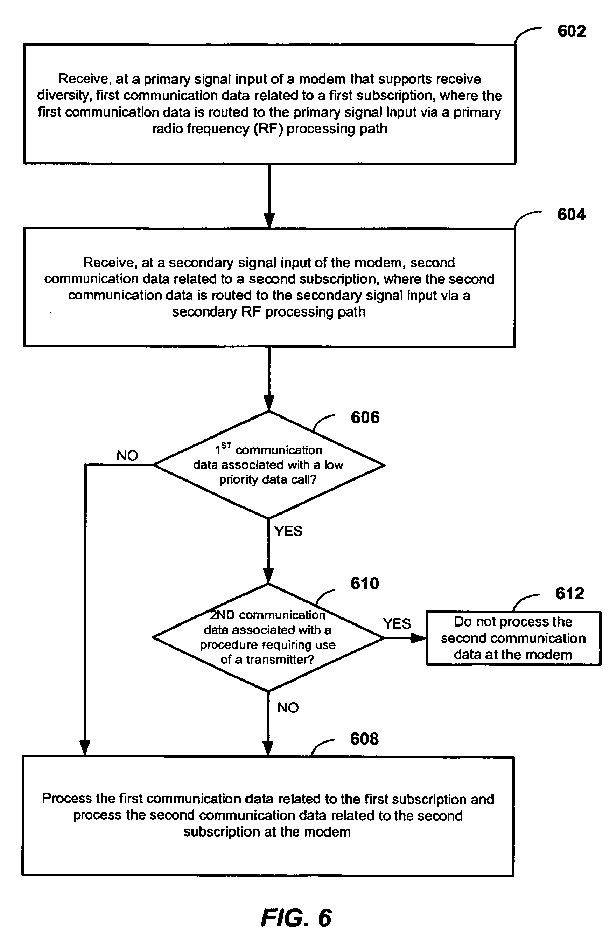

Referring to FIG. 6, a particular embodiment of a method of processing communication data related to multiple subscriptions utilizing a modem that supports receive diversity is illustrated. FIG. 6 illustrates that a mobile communication device with multiple subscriptions may utilize a modem with receive diversity capability (e.g., the modem 216 of FIG. 2) to provide for "simultaneous" dual-receive capabilities with a single shared BB-RF resource chain. For example, the mobile communication device may be the mobile communication device 202 of FIG. 2.

The method includes receiving first communication data at a primary signal input of a modem that supports receive diversity, at 602. The first communication data is related to a first subscription and is routed to the primary signal input of the modem via a primary RF processing path. To illustrate, the modem 216 of FIG. 2 may receive the first communication data 234 at the primary signal input 230, and the first communication data 234 may be routed to the primary signal input 230 via the primary RF processing path 236.

The method also includes receiving second communication data related to a second subscription at a secondary signal input of the modem, at 604. The second communication data is routed to the secondary signal input via a secondary RF processing path. To illustrate, the modem 216 of FIG. 2 may receive the second communication data 238 at the secondary signal input 232, and the second communication data 238 may be routed to the secondary signal input 232 via the secondary RF processing path 240.

The method includes determining whether the first communication data is associated with a low priority data call, at 606. When the first communication data is not associated with a low priority data call, the method includes processing the first communication data related to the first subscription and processing the second communication data related to the second subscription at the modem, at 608. To illustrate, the modem 216 of FIG. 2 may process the first communication data 234 and the second communication data 238. For example, referring to FIG. 3, when the first communication data is associated with a non-timing-critical acquisition or channel maintenance procedure on the first subscription, the receive diversity capability of the modem 216 may enable simultaneous processing of second communication data associated with another non-timing-critical acquisition or channel maintenance procedure on the second subscription. As another example, when the first communication data is associated with a timing critical page demodulation procedure for an incoming call on the first subscription, the receive diversity capability of the modem 216 may enable simultaneous processing of second communication data associated with another timing critical page demodulation procedure for another incoming call on the second subscription.

When the first communication data is associated with a low priority data call, the method includes determining whether the second communication data is associated with a procedure requiring use of a transmitter, at 610. When the second communication data is associated with a procedure requiring use of a transmitter, the second communication data is not processed at the modem, as illustrated at 612. For example, referring to FIG. 3, when the first communication data is associated with a low priority data call on the first subscription and the second communication data is associated with a voice call or data call on the second subscription (i.e., two activities that utilize the transmitter 250), concurrency may not be supported.

When the first communication data is associated with a low priority data call on the first subscription and the second communication data is not associated with a procedure requiring use of a transmitter, the first communication data and the second communication data may be processed concurrently or substantially concurrently. For example, referring to FIG. 3, when the first communication data is associated with a low priority data call on the first subscription and the second communication data is associated with a non-timing-critical acquisition or channel maintenance procedure on the second subscription, concurrency may be supported. As another example, when the first communication data is associated with a low priority data call on the first subscription and the second communication data is associated with a timing critical page demodulation procedure for an incoming call on the second subscription, concurrency may be supported.

FIGs. 4 - 6 illustrate that the receive diversity capability of a modem (e.g., the modem 216 of FIG. 2) may be used to support simultaneous services on different subscriptions without separate dedicated BB-RF resource chains for the different subscriptions.

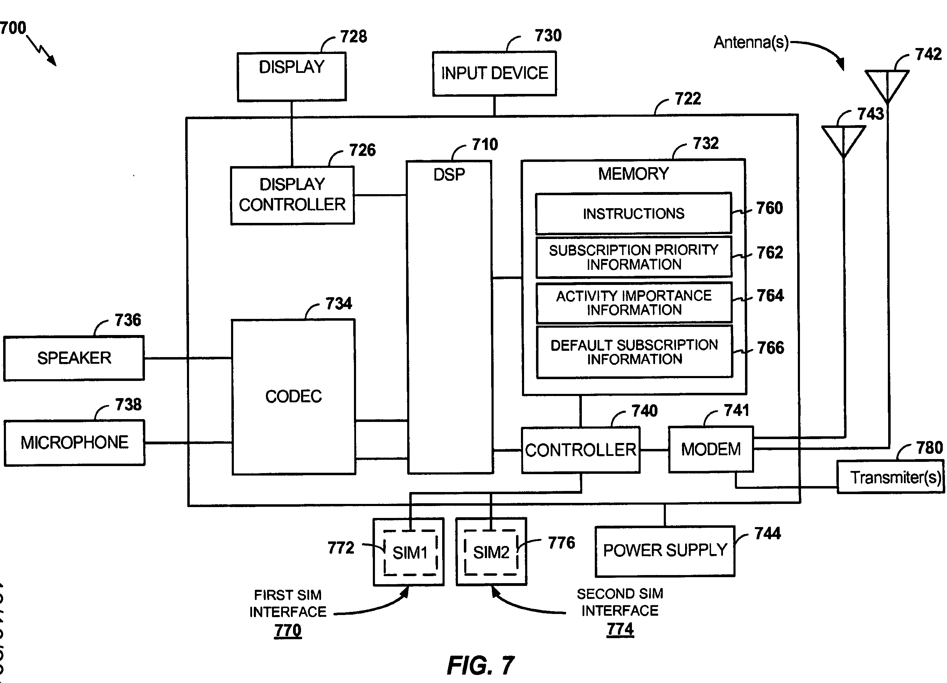

Referring to FIG. 7, a block diagram of a particular illustrative embodiment of a mobile communication device is depicted and generally designated 700. In one embodiment, the mobile communication device 700 of FIG. 7 includes or is included within the mobile communication device 102 of FIG. 1 or the mobile communication device 202 of FIG. 2. Further, all or part of the methods described in FIGs. 4 - 6 may be performed at or by the mobile communication device 700 of FIG. 7. The mobile communication device 700 includes a processor, such as a digital signal processor (DSP) 710, coupled to a memory 732.

In the embodiment illustrated in FIG. 7, the mobile communication device 700 includes a first SIM interface 770 and a second SIM interface 774. The first SIM interface 770 may perform the function of receiving a first identity module (e.g., a first SIM 772) that is associated with a first subscription, and the second SIM interface 774 may perform the function of receiving a second identity module (e.g., a second SIM 776) that is associated with a second subscription. For example, at least one of the SIM interfaces 770, 774 may be a SIM card connector that includes a body having an accommodating space for a SIM card and multiple connected-through receptacles for receiving conducting terminals of a received SIM card. An electrical signaling contact with the SIM card can be made through the conducting terminals and the receptacles. An example interface may include a serial or parallel (e.g., 6-pin or 8-pin) connection. Further, multiple SIM card sizes may be accommodated (e.g., full-size, mini-SIM, or micro-SIM). In alternative embodiments, the mobile communication device 700 may not include multiple SIM interfaces when multiple subscriptions are associated with a common identity module (e.g., a common SIM).

FIG. 7 also shows a display controller 726 that is coupled to the digital signal processor 710 and to a display 728. A coder/decoder (CODEC) 734 can also be coupled to the digital signal processor 710. A speaker 736 and a microphone 738 can be coupled to the CODEC 734. FIG. 7 also indicates that a controller 740 (e.g., the controllers 114, 214 of FIGS. 1 and 2) can be coupled to the digital signal processor 710 and to a modem 741 in communication with one or more wireless antennas (e.g., a first wireless antenna 742 and a second wireless antenna 743) and at least one transmitter 780. In a particular embodiment, the modem 741 supports receive diversity (e.g., the modem 741 may include the modem 216 of FIG. 2), where the first wireless antenna 742 is a primary antenna (e.g., the primary antenna 242 of FIG. 2) and the second wireless antenna 743 is a secondary antenna (e.g., the secondary antenna 246 of FIG. 2).

The memory 732 is a non-transitory tangible computer readable storage medium that stores instructions 760. The instructions 760 may be executable by the DSP 710. For example, the instructions 760 may include instructions that are executable by the DSP 710 to receive, at a primary signal input of a modem 741 that supports receive diversity, first communication data related to a first subscription. The first communication data may be routed to the primary signal input of the modem 741 via a primary RF processing path (not shown in FIG. 7, but see FIG. 2). The instructions 760 may include instructions that are executable by the DSP 710 to receive, at a secondary signal input of the modem 741, second communication data related to a second subscription. The second communication data may be routed to the secondary signal input of the modem 741 via a secondary RF processing path (not shown in FIG. 7, but see FIG. 2). The instructions 760 may include instructions that are executable by the DSP 710 to process the first communication data related to the first subscription and to process the second communication data related to the second subscription.

In a particular embodiment, the instructions 760 may include instructions that are executable by the DSP 710 to determine whether the first communication data includes voice call information or data call (e.g., a GPRS data call) information. In response to determining that the first communication data includes voice call information or data call information, the second communication data may not be processed when the second communication data is associated with a procedure requiring use of a transmitter 780. In another particular embodiment, the instructions 760 may include instructions that are executable by the DSP 710 to determine whether the first communication data is associated with a low priority data call. In response to determining that the first communication data is associated with a low priority data call, the second communication data may not be processed when the second communication data is associated with a procedure requiring use of the transmitter 780. In a scenario where multiple subscriptions are not supported (e.g., multiple calls that each require the transmitter 780), the instructions 760 may include instructions that are executable by the DSP 710 to take one or more alternative actions (e.g., suspension, rejection messages, timeout, etc.).

The memory 732 may also include subscription priority information 762, activity importance information 764, and default subscription information 766. The subscription priority information 762 may include a user-selected subscription priority. For example, a first subscription may be used for voice calls and may be considered a higher priority subscription than a second subscription that is used for data sessions. The activity importance information 764 may include a relative importance of a first activity as compared to a second activity. For example, a particular type of data session (e.g., a video telephony session) may be considered a higher priority activity than a voice call. In a particular embodiment, the default subscription information 766 may designate the first subscription or the second subscription as a default subscription to conduct a data session. The default subscription may be user-selectable. To illustrate, a user may configure the first subscription to be the designated data subscription, and the information may be stored as the default subscription information 766.

In a particular embodiment, an input device 730 may perform the function of receiving a user-selected subscription priority (e.g., the subscription priority information 762), a user selection of a default setting that designates the first subscription or the second subscription as a default subscription to conduct a data session (e.g., the default subscription information 766), the activity importance information 764, or a combination thereof.

The controller 740 may perform the function of arbitrating access to a single BB-RF resource chain (e.g., access to one or more RF resources, the modem 741, the DSP 710, or a combination thereof) to perform a first activity that corresponds to the first subscription or a second activity that corresponds to the second subscription. The arbitration may be based on the subscription priority information 762, the activity importance information 764, the default subscription information 766, or a combination thereof. For example, access to the DSP 710 may be based on the user-selected subscription priority and a relative importance of the first activity as compared to the priority and relative importance of the second activity. For example, in a particular embodiment, the controller 740 may perform the function of interrupting a data session that is processed by the DSP 710 in response to receiving information indicating that a voice call is to be processed by the DSP 710.

In a particular embodiment, the DSP 710, the display controller 726, the memory 732, the CODEC 734, the controller 740, and the modem 741 are included in a system-in-package or system-on-chip device 722. In a particular embodiment, the input device 730 and a power supply 744 are coupled to the system-on-chip device 722. Moreover, in a particular embodiment, as illustrated in FIG. 7, the display device 728, the input device 730, the speaker 736, the microphone 738, the wireless antenna(s) 742, 743, the transmitter(s) 780, the power supply 744, the first SIM 772, the first SIM interface 770, the second SIM 776, and the second SIM interface 774 are external to the system-on-chip device 722. However, each of the display device 728, the input device 730, the speaker 736, the microphone 738, the wireless antenna(s) 742, 743, the transmitter(s) 780, the power supply 744, the first SIM 772, the first SIM interface 770, the second SIM 776, and the second SIM interface 774 can be coupled to a component of the system-on-chip device 722, such as an interface or a controller.

Those of skill would further appreciate that the various illustrative logical blocks, configurations, modules, circuits, and algorithm steps described in connection with the embodiments disclosed herein may be implemented as electronic hardware, computer software, or combinations of both. Various illustrative components, blocks, configurations, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The steps of a method or algorithm described in connection with the embodiments disclosed herein may be embodied directly in hardware, in a software module executed by a processor, or in a combination of the two. A software module may reside in random access memory (RAM), flash memory, read-only memory (ROM), programmable read-only memory (PROM), erasable programmable read-only memory (EPROM), electrically erasable programmable read-only memory (EEPROM), registers, hard disk, a removable disk, a compact disc read-only memory (CD-ROM), or any other form of non-transitory storage medium known in the art. An exemplary storage medium is coupled to the processor such that the processor can read information from, and write information to, the storage medium. In the alternative, the storage medium may be integral to the processor. The processor and the storage medium may reside in an application-specific integrated circuit (ASIC). The ASIC may reside in a computing device or a user terminal (e.g., a mobile phone or a PDA). In the alternative, the processor and the storage medium may reside as discrete components in a computing device or user terminal.

The previous description of the disclosed embodiments is provided to enable a person skilled in the art to make or use the disclosed embodiments. Various modifications to these embodiments will be readily apparent to those skilled in the art,
without departing from the scope of the claims. Thus, the present disclosure is not intended to be limited to the embodiments disclosed herein but is to be accorded the widest scope possible consistent with novel features as defined by the following claims.

## Claims

1. A mobile communication device comprising:
a single baseband-radio frequency (BB-RF) resource chain (104) comprising a baseband processor (117), modem (116), and RF resources (115);
a first identity module (108) communicatively coupled to the single BB-RF resource chain, wherein the first identity module is associated with a first subscription;
a second identity module (112) communicatively coupled to the single BB-RF resource chain, wherein the second identity module is associated with a second subscription; and
a controller (114) communicatively coupled to the single BB-RF resource chain, **characterised in that** the controller is configured to employ a user-configurable priority subscription prioritizing activities based on relative activity importance assigned by the user to arbitrate access to the modem and RF resources of the single BB-RF resource chain to perform, according to the user-configurable priority subscription, one of a first activity that corresponds to the first subscription and a second activity that corresponds to the second subscription, and wherein the controller is configured to interrupt a data session processed by the single BB-RF resource chain in response to receiving information indicating that a voice call is to be processed by the single BB-RF resource chain.

2. The mobile communication device of claim 1, wherein the voice call includes an outgoing voice call.

3. The mobile communication device of claim 1, wherein the voice call includes an incoming voice call and wherein the data session is interrupted to tune away to receive an incoming page associated with the incoming voice call.

4. The mobile communication device of claim 1, wherein the controller (114) is communicatively coupled to the baseband processor (117) and the modem (116) of the single BB-RF resource chain.

5. The mobile communication device of claim 1, wherein the data session is conducted based on a default setting, wherein the default setting designates one of the first subscription and the second subscription as a default subscription to conduct the data session.

6. The mobile communication device of claim 5, wherein the default subscription is user-selectable.

7. The mobile communication device of claim 1, wherein the
modem supports receive diversity, wherein the modem includes a primary signal input and a secondary signal input, wherein the modem is responsive to the controller to:
receive first communication data related to the first subscription at the primary signal input, wherein the first communication data is routed to the primary signal input via a primary radio frequency (RF) processing path;
receive second communication data related to the second subscription at the secondary signal input, wherein the second communication data is routed to the secondary signal input via a secondary RF processing path; and
process the first communication data related to the first subscription and process the second communication data related to the second subscription.

8. The mobile communication device of claim 7, wherein the first communication data includes one of voice call information and data call information, and wherein the second communication data is not processed at the modem when the second communication data is associated with a procedure requiring use of a transmitter.

9. The mobile communication device of claim 7, wherein the first communication data is associated with a non-timing-critical acquisition or channel maintenance procedure, and wherein the second communication data is associated with another non-timing-critical acquisition or channel maintenance procedure.

10. The mobile communication device of claim 7, wherein the first communication data is associated with a timing critical page demodulation procedure for an incoming call, and wherein the second communication data is associated with another timing critical page demodulation procedure for another incoming call.

11. The mobile communication device of claim 7, wherein the first communication data is associated with a low priority data call, and wherein the second communication data is not processed at the modem when the second communication data is associated with a procedure requiring use of a transmitter.

12. A method comprising:
receiving, at a primary signal input (230) of a modem (216) that supports receive diversity, first communication data (234) related to a first subscription of a mobile communication device, wherein the first communication data is routed to the primary signal input via a primary radio frequency (RF) processing path (236);
receiving, at a secondary signal input (232) of the modem 216), second communication data (238) related to a second subscription, wherein the second communication data is routed to the secondary signal input via a secondary RF processing path (240); and
processing the first communication data (234) related to the first subscription and processing the second communication data (238) related to the second subscription at the modem,
**characterised in that** the processing comprises determining whether the first communication data is high priority, and when the first communication data is high priority, determining whether the second communication data is associated with a procedure requiring use of a transmitter, and processing the first communication data and the second communication data based on the two determinations.

13. The method of claim 12, wherein the mobile communication device includes a primary antenna that is associated with the primary RF processing path and wherein the mobile communication device includes a secondary antenna that is associated with the secondary RF processing path.

14. The method of claim 13, wherein the mobile communication device includes a first analog-to-digital converter that is communicatively to the primary antenna and that is communicatively coupled to the primary signal input via the primary RF processing path and wherein the mobile communication device includes a second analog-to-digital converter that is communicatively coupled to the secondary antenna and that is communicatively coupled to the secondary signal input via the secondary RF processing path.

15. A method, comprising:
receiving a first identity module that is associated with a first subscription;
receiving a second identity module that is associated with a second subscription; and **characterised by**:
employing a user-configurable priority subscription prioritizing activities based on relative activity importance assigned by the user for arbitrating access to a modem and RF resources in a single baseband-radio frequency (BB-RF) resource chain to perform, according to the user-configurable priority subscription, one of a first activity that corresponds to the first subscription and a second activity that corresponds to the second subscription, wherein a data session that is processed by the single BB-RF resource chain is interrupted in response to receiving information indicating that a voice call is to be processed by the single BB-RF resource chain.

16. The method of claim 15, further comprising receiving a user selection of a default setting that designates one of the first subscription and the second subscription as a default subscription to conduct the data session.

17. A computer readable tangible medium comprising instructions that, when executed by a processor, cause the processor to:
receive, at a primary signal input (230) of a modem (216) that supports receive diversity, first communication data (234) related to a first subscription of a mobile communication device, wherein the first communication data is routed to the primary signal input via a primary radio frequency (RF) processing path;
receive, at a secondary signal input (232) of the modem (216), second communication data (238) related to a second subscription, wherein the second communication data is routed to the secondary signal input via a secondary RF processing path; and
process the first communication data related to the first subscription and process the second communication data related to the second subscription at the modem by determining whether the first communication data is high priority, and when the first communication data is high priority, determining whether the second communication data is associated with a procedure requiring use of a transmitter, and processing the first communication data and the second communication data based on the two determinations.

18. The computer readable tangible medium of claim 17, further comprising instructions that, when executed by the processor, cause the processor to:
determine whether the first communication data includes one of voice call information and data call information; and
in response to determining that the first communication data includes one of voice call information and data call information, not process the second communication data at the modem when the second communication data is associated with a procedure requiring use of a transmitter.

19. The computer readable tangible medium of claim 17, further comprising instructions that, when executed by the processor, cause the processor to:
determine whether the first communication data is associated with a low priority data call; and
in response to determining that the first communication data is associated with a low priority data call, not process the second communication data at the modem when the second communication data is associated with a procedure requiring use of a transmitter.

## Patentansprüche

1. Eine mobile Kommunikationseinrichtung, die Folgendes aufweist:
eine Einzel-Basisband-Hochfrequenz- bzw. Einzel-BB-HF-Ressourcenkette (104), die einen Basisbandprozessor (117), ein Modem (116) und HF-Ressourcen (115) aufweist;
ein erstes Identitätsmodul (108), das kommunikativ an die Einzel-BB-HF-Ressourcenkette gekoppelt ist, wobei das erste Identitätsmodul mit einer ersten Subskription bzw. Zugangsberechtigung assoziiert ist;
ein zweites Identitätsmodul (112), das kommunikativ an die Einzel-BB-HF-Ressourcenkette gekoppelt ist, wobei das zweite Identitätsmodul mit einer zweiten Subskription assoziiert ist; und
einen Controller (114), der kommunikativ an die Einzel-BB-HF-Ressourcenkette gekoppelt ist, **dadurch gekennzeichnet, dass** der Controller konfiguriert ist zum Einsetzen einer von einem Nutzer konfigurierbaren Prioritätssubskription, die Aktivitäten priorisiert, und zwar basierend auf einer relativen Aktivitätswichtigkeit, die durch den Nutzer zugewiesen ist, um Zugriff auf das Modem und die HF-Ressourcen der Einzel-BB-HF-Ressourcenkette auszuhandeln, um gemäß der vom Nutzer konfigurierbaren Prioritätssubskription Priorität eine erste Aktivität, die der ersten Subskription entspricht oder eine zweite Aktivität, die der zweiten Subskription entspricht, auszuführen, und wobei der Controller konfiguriert ist zum Unterbrechen einer Datensitzung, die durch die Einzel-BB-HF-Ressourcenkette verarbeitet wird, ansprechend auf Empfangen von Information, die anzeigt, dass ein Sprachanruf durch die Einzel-BB-HF-Ressourcenkette verarbeitet werden soll.

2. Mobilkommunikationseinrichtung nach Anspruch 1, wobei der Sprachanruf einen abgehenden Sprachanruf beinhaltet.

3. Mobilkommunikationseinrichtung nach Anspruch 1, wobei der Sprachanruf einen ankommenden Sprachanruf beinhaltet und wobei die Datensitzung unterbrochen wird zum Umstellen auf Empfangen eines ankommenden Pages bzw. Funkrufs, der mit dem ankommenden Sprachanruf assoziiert ist.

4. Mobilkommunikationseinrichtung nach Anspruch 1, wobei der Controller (114) kommunikativ an den Basisbandprozessor (117) und das Modem (116) der Einzel-BB-HF-Ressourcenkette gekoppelt ist.

5. Mobilkommunikationseinrichtung nach Anspruch 1, wobei die Datensitzung basierend auf einer Voreinstellung durchgeführt wird, wobei die Voreinstellung die erste Subskription oder die zweite Subskription als eine voreingestellte Subskription zum Durchführen der Datensitzung designiert bzw. bestimmt.

6. Mobilkommunikationseinrichtung nach Anspruch 5, wobei die voreingestellte Subskription von einem Nutzer auswählbar ist.

7. Mobilkommunikationseinrichtung nach Anspruch 1, wobei das Modem Empfangsdiversität unterstützt, wobei das Modem einen primären Signaleingang und einen sekundären Signaleingang beinhaltet, wobei das Modem auf den Controller anspricht zum:
Empfangen erster Kommunikationsdaten, die mit der ersten Subskription an dem primären Signaleingang in Beziehung stehen, wobei die ersten Kommunikationsdaten an den primären Signaleingang über einen primären Hochfrequenz- bzw. HF-Verarbeitungspfad geleitet werden;
Empfangen zweiter Kommunikationsdaten, die mit der zweiten Subskription an dem sekundären Signaleingang in Beziehung stehen, wobei die zweiten Kommunikationsdaten an den sekundären Signaleingang über einen sekundären HF-Verarbeitungspfad geleitet werden; und
Verarbeiten der ersten Kommunikationsdaten, die mit der ersten Subskription in Beziehung stehen, und Verarbeiten der zweiten Kommunikationsdaten, die mit der zweiten Subskription in Beziehung stehen.

8. Mobilkommunikationseinrichtung nach Anspruch 7, wobei die ersten Kommunikationsdaten Sprachanrufinformation oder Datenanrufinformation beinhalten, und wobei die zweiten Kommunikationsdaten nicht an dem Modem verarbeitet werden, wenn die zweiten Kommunikationsdaten mit einer Prozedur assoziiert sind, die eine Verwendung eines Senders erfordert.

9. Mobilkommunikationseinrichtung nach Anspruch 7, wobei die ersten Kommunikationsdaten mit einer nicht timing- bzw. zeitkritischen Akquisitions- bzw. Erfassungs- oder Kanalerhaltungsprozedur assoziiert sind, und wobei die zweiten Kommunikationsdaten mit einer weiteren, nicht zeitkritischen Erfassungs- oder Kanalerhaltungsprozedur assoziiert sind.

10. Mobilkommunikationseinrichtung nach Anspruch 7, wobei die ersten Kommunikationsdaten mit einer zeitkritischen Page- bzw. Funkrufdemodulationsprozedur für einen ankommenden Anruf assoziiert sind, und wobei die zweiten Kommunikationsdaten mit einer weiteren, zeitkritischen Funkrufdemodulationsprozedur für einen weiteren ankommenden Anruf assoziiert sind.

11. Mobilkommunikationseinrichtung nach Anspruch 7, wobei die ersten Kommunikationsdaten mit einem Datenanruf mit niedriger Priorität assoziiert sind, und wobei die zweiten Kommunikationsdaten nicht an dem Modem verarbeitet werden, wenn die zweiten Kommunikationsdaten mit einer Prozedur assoziiert sind, die eine Verwendung eines Senders erfordert.

12. Ein Verfahren, das Folgendes aufweist:
Empfangen, an einem primären Signaleingang (230) eines Modems (216), das Empfangsdiversität unterstützt, erster Kommunikationsdaten (234), die mit einer ersten Subskription einer Mobilkommunikationseinrichtung in Beziehung stehen, wobei die ersten Kommunikationsdaten an den primären Signaleingang über einen primären Hochfrequenz- bzw. HF-Verarbeitungspfad (236) geleitet werden;
Empfangen, an einem sekundären Signaleingang (232) des Modems (216), zweiter Kommunikationsdaten (238), die mit einer zweiten Subskription in Beziehung stehen, wobei die zweiten Kommunikationsdaten an den sekundären Signaleingang über einen sekundären HF-Verarbeitungspfad (240) geleitet werden; und
Verarbeiten der ersten Kommunikationsdaten (234), die mit der ersten Subskription in Beziehung stehen und Verarbeiten der zweiten Kommunikationsdaten (238), die mit der zweiten Subskription in Beziehung stehen, an dem Modem,
**dadurch gekennzeichnet, dass** das Verarbeiten Bestimmen aufweist, ob die ersten Kommunikationsdaten eine hohe Priorität haben, und wenn die ersten Kommunikationsdaten eine hohe Priorität haben, Bestimmen, ob die zweiten Kommunikationsdaten mit einer Prozedur assoziiert sind, die die Verwendung eines Senders erfordert, und
Verarbeiten der ersten Kommunikationsdaten und der zweiten Kommunikationsdaten basierend auf den zwei Bestimmungen.

13. Verfahren nach Anspruch 12, wobei die Mobilkommunikationseinrichtung eine primäre Antenne beinhaltet, die mit dem primären HF-Verarbeitungspfad assoziiert ist und wobei die Mobilkommunikationseinrichtung eine sekundäre Antenne beinhaltet, die mit dem sekundären HF-Verarbeitungspfad assoziiert ist.

14. Verfahren nach Anspruch 13, wobei die Mobilkommunikationseinrichtung einen ersten Analog-Digital-Wandler beinhaltet, der kommunikativ an die primäre Antenne und der kommunikativ an den primären Signaleingang gekoppelt ist über den primären HF-Verarbeitungspfad, und wobei die Mobilkommunikationseinrichtung einen zweiten Analog-Digital-Wandler beinhaltet, der kommunikativ an die sekundäre Antenne gekoppelt ist und der kommunikativ an den sekundären Signaleingang über den sekundären HF-Verarbeitungspfad gekoppelt ist.

15. Ein Verfahren, das Folgendes aufweist:
Empfangen eines ersten Identitätsmoduls, das mit einer ersten Subskription assoziiert ist;
Empfangen eines zweiten Identitätsmoduls, das mit einer zweiten Subskription assoziiert ist; und das **gekennzeichnet ist durch**:
Einsetzen einer von einem Nutzer konfigurierbaren Prioritätssubskription, die Aktivitäten priorisiert, und zwar basierend auf einer relativen Aktivitätswichtigkeit, die **durch** den Nutzer zugewiesen ist, zum Aushandeln von Zugriff auf ein Modem und HF-Ressourcen in einer Einzel-Basisband-Hochfrequenz- bzw. Einzel-BB-HF-Ressourcenkette zum Durchführen, gemäß der von einem Nutzer konfigurierbaren Prioritätssubskription, einer ersten Aktivität, die der ersten Subskription entspricht oder einer zweiten Aktivität, die der zweiten Subskription entspricht, wobei eine Datensitzung, die von der Einzel-BB-HF-Ressourcenkette verarbeitet wird, ansprechend auf Empfangen von Information unterbrochen wird, die anzeigt, dass ein Sprachanruf **durch** die Einzel-BB-HF-Ressourcenkette verarbeitet werden soll.

16. Verfahren nach Anspruch 15, das weiter Empfangen einer Nutzerauswahl einer voreingestellten Einstellung aufweist, die eine erste Subskription oder eine zweite Subskription als eine voreingestellte Subskription zum Durchführen der Datensitzung bestimmt.

17. Ein computerlesbares, materielles Medium, das Instruktionen aufweist, die, wenn sie von einem Prozessor ausgeführt werden, den Prozessor veranlassen zum:
Empfangen, an einem primären Signaleingang (230) eines Modems (216), das Empfangsdiversität unterstützt, erster Kommunikationsdaten (234), die mit einer ersten Subskription einer Mobilkommunikationseinrichtung in Beziehung stehen, wobei die ersten Kommunikationsdaten an den primären Signaleingang über einen primären Hochfrequenz- bzw. HF-Verarbeitungspfad (236) geleitet werden;
Empfangen, an einem sekundären Signaleingang (232) des Modems (216), zweiter Kommunikationsdaten (238), die mit einer zweiten Subskription in Beziehung stehen, wobei die zweiten Kommunikationsdaten an den sekundären Signaleingang über einen sekundären HF-Verarbeitungspfad geleitet werden; und
Verarbeiten der ersten Kommunikationsdaten, die mit der ersten Subskription in Beziehung stehen und Verarbeiten der zweiten Kommunikationsdaten, die mit der zweiten Subskription in Beziehung stehen, an dem Modem, durch Bestimmen, ob die ersten Kommunikationsdaten eine hohe Priorität haben,
und wenn die ersten Kommunikationsdaten eine hohe Priorität haben, Bestimmen, ob die zweiten Kommunikationsdaten mit einer Prozedur assoziiert sind, die die Verwendung eines Senders erfordert, und Verarbeiten der ersten Kommunikationsdaten und der zweiten Kommunikationsdaten basierend auf den zwei Bestimmungen.

18. Computerlesbares, materielles Medium nach Anspruch 17, das weiter Instruktionen aufweist, die, wenn sie von dem Prozessor ausgeführt werden, den Prozessor veranlassen zum:
Bestimmen, ob die ersten Kommunikationsdaten Sprachanrufinformation oder Datenanrufinformation beinhalten; und
ansprechend auf das Bestimmen, dass die ersten Kommunikationsdaten Sprachanrufinformation oder Datenanrufinformation beinhalten, Nicht-Verarbeiten der zweiten Kommunikationsdaten an dem Modem, wenn die zweiten Kommunikationsdaten mit einer Prozedur assoziiert sind, die eine Verwendung eines Senders erfordert.

19. Computerlesbares, materielles Medium nach Anspruch 17, das weiter Instruktionen aufweist, die, wenn sie von dem Prozessor ausgeführt werden, den Prozessor veranlassen zum:
Bestimmen, ob die ersten Kommunikationsdaten mit einem Datenanruf mit niedriger Priorität assoziiert sind; und
ansprechend auf Bestimmen, dass die ersten Kommunikationsdaten mit einem Datenanruf mit niedriger Priorität assoziiert sind, Nicht-Verarbeiten der zweiten Kommunikationsdaten an dem Modem, wenn die zweiten Kommunikationsdaten mit einer Prozedur assoziiert sind, die die Verwendung eines Senders erfordert.

## Revendications

1. Dispositif de communication mobile, comprenant :
une chaîne de ressources de fréquences radio à bande de base unique (BB-RF) (104) comprenant un processeur de bande de base (117), un modem (116), et des ressources de fréquences RF (115) ;
un premier module d'identité (108) couplé en communication à la chaîne de ressources de fréquences BB-RF, dans lequel le premier module d'identité est associé à un premier abonnement ;
un second module d'identité (112) couplé en communication à la chaîne de ressources de fréquences BB-RF, dans lequel le second module d'identité est associé à un second abonnement ; et
un contrôleur (114) couplé en communication à la chaîne de ressources de fréquences BB-RF, **caractérisé en ce que** le contrôleur est configuré de manière à employer un abonnement spécifiant des priorités configurable par l'utilisateur hiérarchisant des activités sur la base de l'importance d'activités relative affectée par l'utilisateur afin d'arbitrer l'accès au modem et aux ressources de fréquences RF de la chaîne de ressources de fréquences BB-RF en vue de mettre en oeuvre, selon l'abonnement spécifiant des priorités configurable par l'utilisateur, l'une parmi une première activité qui correspond au premier abonnement et une seconde activité qui correspond au second abonnement, et dans lequel le contrôleur est configuré de manière à interrompre une session de données traitée par la chaîne de ressources de fréquences BB-RF, en réponse à la réception d'informations indiquant qu'un appel vocal doit être traité par la chaîne de ressources de fréquences BB-RF.

2. Dispositif de communication mobile selon la revendication 1, dans lequel l'appel vocal inclut un appel vocal sortant.

3. Dispositif de communication mobile selon la revendication 1, dans lequel l'appel vocal inclut un appel vocal entrant, et dans lequel la session de données est interrompue par suppression de l'accord en vue de recevoir un appel en diffusion entrant associé à l'appel vocal entrant.

4. Dispositif de communication mobile selon la revendication 1, dans lequel le contrôleur (114) est couplé en communication au processeur de bande de base (117) et au modem (116) de la chaîne de ressources de fréquences BB-RF.

5. Dispositif de communication mobile selon la revendication 1, dans lequel la session de données est mise en oeuvre sur la base d'un paramétrage par défaut, dans lequel le paramétrage par défaut désigne l'un du premier abonnement et du second abonnement en qualité d'abonnement par défaut pour mettre en oeuvre la session de données.

6. Dispositif de communication mobile selon la revendication 5, dans lequel l'abonnement par défaut est sélectionnable par l'utilisateur.

7. Dispositif de communication mobile selon la revendication 1, dans lequel
le modem prend en charge une diversité de réception, dans lequel le modem inclut une entrée de signal primaire et une entrée de signal secondaire, dans lequel le modem répond au contrôleur pour :
recevoir des premières données de communication connexes au premier abonnement au niveau de l'entrée de signal primaire, dans lequel les premières données de communication sont acheminées vers l'entrée de signal primaire par le biais d'un chemin de traitement de fréquence radio (RF) primaire ;
recevoir des secondes données de communication connexes au second abonnement au niveau de l'entrée de signal secondaire, dans lequel les secondes données de communication sont acheminées vers l'entrée de signal secondaire par le biais d'un chemin de traitement de fréquence RF secondaire ; et
traiter les premières données de communication connexes au premier abonnement et traiter les secondes données de communication connexes au second abonnement.

8. Dispositif de communication mobile selon la revendication 7, dans lequel les premières données de communication incluent l'une parmi des informations d'appel vocal et des informations d'appel de données, et dans lequel les secondes données de communication ne sont pas traitées au niveau du modem lorsque les secondes données de communication sont associées à une procédure nécessitant l'utilisation d'un émetteur.

9. Dispositif de communication mobile selon la revendication 7, dans lequel les premières données de communication sont associées à une procédure de maintenance de canal ou d'acquisition à temps non critique, et dans lequel les secondes données de communication sont associées à une autre procédure de maintenance de canal ou d'acquisition à temps non critique.

10. Dispositif de communication mobile selon la revendication 7, dans lequel les premières données de communication sont associées à une procédure de démodulation d'un appel en diffusion à temps critique pour un appel entrant, et dans lequel les secondes données de communication sont associées à une autre procédure de démodulation d'un appel en diffusion à temps critique pour un autre appel entrant.

11. Dispositif de communication mobile selon la revendication 7, dans lequel les premières données de communication sont associées à un appel de données à priorité faible, et dans lequel les secondes données de communication ne sont pas traitées au niveau du modem lorsque les secondes données de communication sont associées à une procédure nécessitant l'utilisation d'un émetteur.

12. Procédé comprenant les étapes ci-dessous consistant à :
recevoir, au niveau d'une entrée de signal primaire (230) d'un modem (216) qui prend en charge une diversité de réception, des premières données de communication (234) connexes à un premier abonnement d'un dispositif de communication mobile, dans lequel les premières données de communication sont acheminées vers l'entrée de signal primaire par le biais d'un chemin de traitement de fréquence radio (RF) primaire (236) ;
recevoir, au niveau d'une entrée de signal secondaire (232) du modem (216), des secondes données de communication (238) connexes à un second abonnement, dans lequel les secondes données de communication sont acheminées vers l'entrée de signal secondaire par le biais d'un chemin de traitement de fréquence RF secondaire (240) ; et
traiter les premières données de communication (234) connexes au premier abonnement, et traiter les secondes données de communication (238) connexes au second abonnement, au niveau du modem ;
**caractérisé en ce que** le traitement comprend la détermination de si les premières données de communication présentent une priorité élevée, et lorsque les premières données de communication présentent une priorité élevée, la détermination de si les secondes données de communication sont associées à une procédure nécessitant l'utilisation d'un émetteur, et à traiter les premières données de communication et les secondes données de communication sur la base des deux déterminations.

13. Procédé selon la revendication 12, dans lequel le dispositif de communication mobile inclut une antenne primaire qui est associée au chemin de traitement de fréquence RF primaire, et dans lequel le dispositif de communication mobile comprend une antenne secondaire qui est associée au chemin de traitement de fréquence RF secondaire.

14. Procédé selon la revendication 13, dans lequel le dispositif de communication mobile inclut un premier convertisseur analogique à numérique qui est couplé en communication à l'antenne primaire et qui est couplé en communication à l'entrée de signal primaire par le biais du chemin de traitement de fréquence RF primaire, et dans lequel le dispositif de communication mobile inclut un second convertisseur analogique à numérique qui est couplé en communication à l'antenne secondaire et qui est couplé en communication à l'entrée de signal secondaire par le biais du chemin de traitement de fréquence RF secondaire.

15. Procédé comprenant les étapes ci-dessous consistant à :
recevoir un premier module d'identité qui est associé à un premier abonnement ;
recevoir un second module d'identité qui est associé à un second abonnement ; et **caractérisé par** les étapes ci-dessous consistant à :
employer un abonnement spécifiant des priorités configurable par l'utilisateur, hiérarchisant des activités sur la base d'une importance d'activités relative affectée par l'utilisateur pour arbitrer l'accès à un modem et à des ressources de fréquences RF dans une chaîne de ressources de fréquences radio à bande de base unique (BB-RF) en vue de mettre en oeuvre, selon l'abonnement spécifiant des priorités configurable par l'utilisateur, l'une parmi une première activité qui correspond au premier abonnement et une seconde activité qui correspond au second abonnement, dans lequel une session de données qui est traitée par la chaîne de ressources de fréquences BB-RF est interrompue en réponse à la réception d'informations indiquant qu'un appel vocal doit être traité par la chaîne de ressources de fréquences BB-RF.

16. Procédé selon la revendication 15, comprenant en outre l'étape consistant à recevoir une sélection d'utilisateur d'un paramétrage par défaut qui désigne l'un du premier abonnement et du second abonnement en qualité d'abonnement par défaut pour mettre en oeuvre la session de données.

17. Support tangible lisible par ordinateur comprenant des instructions qui, lorsqu'elles sont exécutées par un processeur, amènent le processeur à :
recevoir, au niveau d'une entrée de signal primaire (230) d'un modem (216) qui prend en charge une diversité de réception, des premières données de communication (234) connexes à un premier abonnement d'un dispositif de communication mobile, dans lequel les premières données de communication sont acheminées vers l'entrée de signal primaire par le biais d'un chemin de traitement de fréquence radio (RF) primaire ;
recevoir, au niveau d'une entrée de signal secondaire (232) du modem (216), des secondes données de communication (238) connexes à un second abonnement, dans lequel les secondes données de communication sont acheminées vers l'entrée de signal secondaire par le biais d'un chemin de traitement de fréquence RF secondaire ; et
traiter les premières données de communication connexes au premier abonnement, et traiter les secondes données de communication connexes au second abonnement, au niveau du modem, en déterminant si les premières données de communication présentent une priorité élevée, et lorsque les premières données de communication présentent une priorité élevée, en déterminant si les secondes données de communication sont associées à une procédure nécessitant l'utilisation d'un émetteur, et traiter les premières données de communication et les secondes données de communication sur la base des deux déterminations.

18. Support tangible lisible par ordinateur selon la revendication 17, comprenant en outre des instructions qui, lorsqu'elles sont exécutées par le processeur, amènent le processeur à :
déterminer si les premières données de communication incluent l'une parmi des informations d'appel vocal et des informations d'appel de données ; et
en réponse à la détermination selon laquelle les premières données de communication incluent l'une parmi des informations d'appel vocal et des informations d'appel de données, ne pas traiter les secondes données de communication au niveau du modem lorsque les secondes données de communication sont associées à une procédure nécessitant l'utilisation d'un émetteur.

19. Support tangible lisible par ordinateur selon la revendication 17, comprenant en outre des instructions qui, lorsqu'elles sont exécutées par le processeur, amènent le processeur à :
déterminer si les premières données de communication sont associées à un appel de données à priorité faible ; et
en réponse à la détermination selon laquelle les premières données de communication sont associées à un appel de données à priorité faible, ne pas traiter les secondes données de communication au niveau du modem lorsque les secondes données de communication sont associées à une procédure nécessitant l'utilisation d'un émetteur.
